# EUROPEAN PATENT APPLICATION

(11) **EP 4 321 224 A1**
(43) Date of publication of application: **14.02.2024**
(21) Application number: 22807785.5
(22) Date of filing: 10.05.2022
(51) Int. Cl.: A62C 35/68, A62C 3/16, A62C 37/38, H01M 10/48, H01M 10/60, H01M 10/42, H01M 50/375, A62C 37/36

(54) **FIRE-EXTINGUISHING SYSTEM OF ENERGY STORAGE SYSTEM**

(30) Priority: 10.05.2021 KR 20210060298; 07.01.2022 KR 20220002678
(71) Applicant: Samsung SDI Co., Ltd., Yongin-si, Gyeonggi-do 17084 (KR)
(72) Inventor: KIM, Won Sung, Yongin-si, Gyeonggi-do 17084 (KR); KIM, Soo Taek, Yongin-si, Gyeonggi-do 17084 (KR); KIM, Myoung Kon, Yongin-si, Gyeonggi-do 17084 (KR); SONG, In Hyeok, Yongin-si, Gyeonggi-do 17084 (KR); LEE, Hyun Soon, Yongin-si, Gyeonggi-do 17084 (KR); IN, Dong Seok, Yongin-si, Gyeonggi-do 17084 (KR); KIM, Geon Il, Yongin-si, Gyeonggi-do 17084 (KR); SONG, Ji Won, Yongin-si, Gyeonggi-do 17084 (KR); KANG, Deok Jo, Yongin-si, Gyeonggi-do 17084 (KR); KANG, Sung Koo, Yongin-si, Gyeonggi-do 17084 (KR)
(74) Representative: Walaski, Jan Filip
(86) International application number: PCT/KR2022/006654
(87) International publication number: WO 2022/240137

(57) **Abstract**

An embodiment of the present invention relates to a fire-extinguishing system of an energy storage device including a plurality of battery racks for receiving a plurality of battery modules, the fire-extinguishing system comprising: a sensing part for detecting at least one of a temperature, a voltage, and smoke of a battery module; and a fire-extinguishing part for injecting a fire-extinguishing chemical to the battery module when at least one of values detected by the sensing part exceeds a predetermined threshold value, wherein the fire-extinguishing part further comprises a pipe fitting member provided on a path through which the fire-extinguishing chemical is supplied with respect to the battery rack to change a supply pressure of the fire-extinguishing chemical.

## Description

### TECHNICAL FIELD

The present invention relates to a fire-extinguishing system of an energy storage device capable of effectively performing fire-extinguishment in the event of fire.

### BACKGROUND ART

An energy storage system is a system that is capable of storing surplus electricity or electricity produced using renewable energy. The energy storage system may be used to store idle power during a time of low demand for electricity and then supply electricity during a time of high demand so that the supply of the electricity is smoothly controlled.

A space or facility in which the energy storage system is installed and operated has to be provided with equipment to suppress battery fire caused by electric shock, short circuit, external surge, etc. A typical fire-extinguishing system is constituted by a fire detection sensor, a sprinkler installed around a battery rack or on the ceiling, or a fire-extinguishing chemical injector.

The fire-extinguishing system may use an indirect injection method, in which water or fire-extinguishing chemical is injected close to a battery or onto an entire region, on which the battery is installed, in the event of fire of the battery. However, as an energy density of the battery continues to increase, an amount of flame and an ejection pressure at a vent of a battery cell are increasing, and thus, it difficult to extinguish or suppress the fire early with general fire suppression equipment. Therefore, demands for the fire-extinguishing system that effectively suppresses multiple battery fire in the energy storage system and enables early suppression in the event of high-pressure fire are gradually increasing.

The above-described information disclosed in the technology that serves as the background of the present disclosure is only for improving understanding of the background of the present disclosure and thus may include information that does not constitute the related art.

### DISCLOSURE OF THE INVENTION

### TECHNICAL PROBLEM

An object of the present invention is to provide a fire-extinguishing system of an energy storage system capable of effectively suppressing and extinguishing fire.

### TECHNICAL SOLUTION

A fire-extinguishing system of an energy storage device including a plurality of battery racks configured to accommodate a plurality of battery modules, the fire-extinguishing system according to an embodiment of the present invention may include: a sensing part configured to detect at least one of a temperature, a voltage, or smoke of each of the battery modules; and a fire-extinguishing part configured to inject a fire-extinguishing chemical to the battery module if at least one of values detected by the sensing part is greater than a preset threshold value, wherein the fire-extinguishing part may further include a pipe fitting member provided on a path through which the fire-extinguishing chemical is supplied with respect to the battery racks to change a supply pressure of the fire-extinguishing chemical.

Here, the pipe fitting member may be configured to reduce an inner diameter of the path through which the fire-extinguishing chemical passes.

In addition, the pipe fitting member may include an orifice having an inner diameter less than that of an orifice connected to the fire-extinguishing part in a portion of the path through which the fire extinguishing chemical is supplied to the battery racks.

In addition, the pipe fitting member may include: a swaged nipple provided with a first orifice coupled to a chemical container of the fire-extinguishing part, and a second orifice having an inner diameter that gradually decreases from the first orifice.

In addition, based on a cross-section, an angle of the second orifice may be 30° to 120°.

In addition, a third orifice having an inner diameter that has the same size as the final inner diameter of the second orifice may be further disposed at an end of the second orifice.

In addition, the pipe fitting member may further include an adapter coupled to an end of the swaged nipple and provided with an orifice therein to define an injection path for the fire-extinguishing chemical.

In addition, a ring member having an inner diameter less than that of the orifice of the adapter may be further provided inside the adapter.

In addition, in the inner diameters of the pipe fitting member, the smallest inner diameter may be 1.5 [mm] to 2.5 [mm].

In addition, a pressure of the fire-extinguishing chemical passing through the pipe fitting member may be reduced by 2 [bar] to 5 [bar],

### ADVANTAGEOUS EFFECTS

According to the embodiment of the present invention, the fire-extinguishing system may be provided to early suppress and extinguish the fire that may occur due to the lighting strike on the ground, the short circuit, etc. due to the internal and external factors of the energy storage system and minimize the spreading of the fire. As a result, there may be the effect of protecting the expensive energy storage device and improving the customer reliability.

In addition, according to the embodiment of the present invention, the injection time may increase by reducing the injection pressure of the fire-extinguishing chemical in the fire-extinguishing system.

### BRIEF DESCRIPTION OF THE DRAWINGS

FIG. 1 is a block diagram briefly illustrating a fire-extinguishing system of an energy storage system according to an embodiment of the present invention.
FIG. 2 is a schematic view illustrating an example of the fire-extinguishing system applied to the energy storage system according to the present invention.
FIG. 3 is a perspective view briefly illustrating main portions illustrated in FIG. 1.
FIG. 4 is a partial perspective view illustrating a battery rack according to a first embodiment of the present invention.
FIG. 5 is a perspective view illustrating a moving direction of a fire-extinguishing chemical in the battery rack of FIG. 4.
FIG. 6 is a perspective view illustrating a battery module and an injection pipe illustrated in FIG. 4.
FIG. 7 is an enlarged perspective view illustrating a coupling portion of the battery module and the injection pipe according to FIG. 6.
FIG. 8 is a partial cross-sectional view taken along line B-B of FIG. 7.
FIG. 9 is a perspective view illustrating a bottom surface of the injection pipe illustrated in FIG. 4.
FIG. 10 is an enlarged perspective view of a region C of FIG. 9.
FIG. 11 is a plan view illustrating a bottom surface of the injection pipe illustrated in FIG. 10.
FIG. 12 is an enlarged perspective view illustrating a portion of a bottom surface of an injection pipe according to a second embodiment of the present invention.
FIG. 13 is a plan view illustrating a portion of the bottom surface of the injection pipe illustrated in FIG. 12.
FIG. 14 is a schematic view briefly illustrating a fire suppression process according to an embodiment of the present invention.
FIG. 15 is a schematic view briefly illustrating a fire-extinguishing system of an energy storage system according to another embodiment of the present invention.
FIG. 16 is a block diagram briefly illustrating a fire-extinguishing system of an energy storage system according to further another embodiment of the present invention.
FIGS. 17a and 17b are views illustrating an example of a pipe fitting member used in the fire-extinguishing system of FIG. 16.
FIGS. 18a and 18b are views illustrating another example of the pipe fitting member used in the fire-extinguishing system of FIG. 16.
FIGS. 19a and 19b are views illustrating further another example of the pipe fitting member used in the fire-extinguishing system of FIG. 16.
FIGS. 20a and 20b are views illustrating further another example of the pipe fitting member used in the fire-extinguishing system of FIG. 16.
FIGS. 21a and 21b are graphs comparing changes in injection time of a fire-extinguishing chemical in the energy storage system according to further another embodiment of the present invention.

### [Description of the code on the main part of the drawing]

| | | | |
|---|---|---|---|
| 1: | Energy storage device | 10: | Battery rack |
| 30: | Battery module | 33: | Battery cell |
| 35: | Support bracket | 100: | Supply part |
| 110: | Chemical container | 140: | Adjuster |
| 300: | Fire-extinguishing part | 330: | injection pipe |
| 332: | injection hole | 334: | Thermosensitive member |
| 500: | Sensing part | | |
| 240, 250, 260, 270; | Pipe fitting member | | |
| 241, 251, 261, 271; | Swaged nipple | | |
| 242, 252, 262; | Adapter | | |

### MODE FOR CARRYING OUT THE INVENTION

Embodiments of the present disclosure may, however, be embodied in many different forms and should not be construed as being limited to the embodiments set forth herein; rather, these embodiments are provided so that those skilled in the art thoroughly understand the present invention. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present invention is not limited thereto. For example, an element or feature shown in the drawings is turned inside out, the element or feature described as "beneath" or "below" may change into "above" or "upper". Thus, the term "lower" may encompass the term "upper" or "below".

In addition, a controller and/or other related devices or components according to the present invention may be implemented using any suitable hardware, firmware (e.g., application-specific semiconductor), software, or a suitable combination of software, firmware, and hardware. For example, various components of the controller and/or other related devices or parts according to the present invention may be formed on one integrated circuit chip or a separate integrated circuit chip. In some embodiments, various components of the controller may be implemented on a flexible printed circuit film and may be formed on a tape carrier package, a printed circuit board, or a substrate that is the same as the controller. In some embodiments, various components of the controller may be processors or threads, which are executed in one or more processors, in one or more computing devices, and it may execute computer program instructions and interact with other components to perform various functions discussed below. The computer program instructions may be stored in memory that is capable of being executed in the computing device using standard memory device such as, for example, random access memory. The computer program instructions may also be stored in other non-transitory computer readable media such as, for example, a CD-ROM, flash drive or the like. In some embodiments, those skilled in the art related to the present disclosure should be recognized that the functions of various computing devices are combined with each other or incorporated into one computing device, or the functions of a particular computing device are dispersed in one or more other computing devices without departing from the exemplary embodiments of the present invention.

For example, the controller according to the present invention may operate on a normal commercial computer constituted by a central processing unit, a mass storage device such as a hard disk or a solid-state disk, a volatile memory device, an input device such as a keyboard or a mouse, and an output device such as a monitor or a printer.

Hereinafter, a fire-distinguishing system of an energy storage device according to embodiments of the present invention will be described in detail with reference to the accompanying drawings.

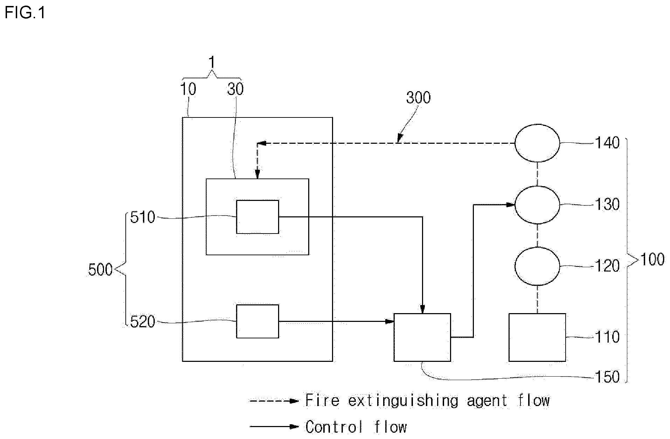

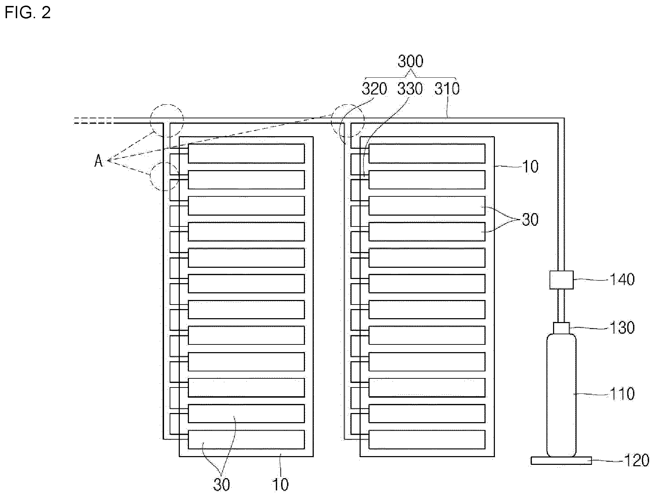

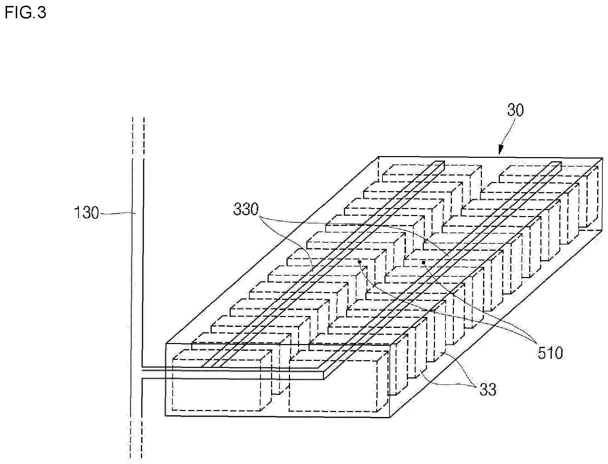

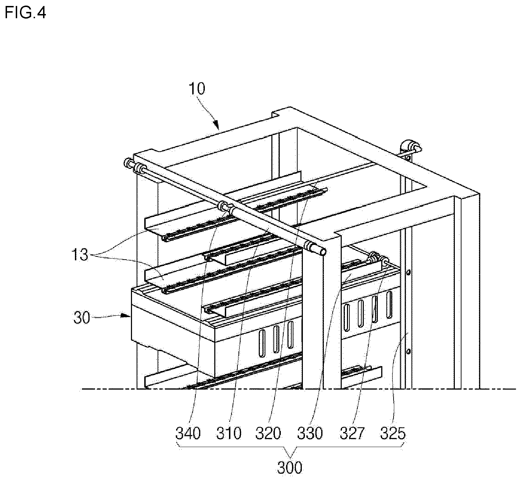

FIG. 1 is a block diagram briefly illustrating a fire-extinguishing system of an energy storage system according to an embodiment of the present invention. FIG. 2 is a schematic view illustrating an example of the fire-extinguishing system applied to the energy storage system according to the present invention. FIG. 3 is a perspective view briefly illustrating main portions illustrated in FIG. 1. FIG. 4 is a partial perspective view illustrating a battery rack according to a first embodiment of the present invention.

As illustrated in FIGS. 1 to 4, a fire-extinguishing system of an energy storage device (energy storage system or energy storage device) may largely include a supply part 100 for supplying a fire-extinguishing chemical to the energy storage device 1, a fire-extinguishing part 300 for transferring and injecting the fire-extinguishing chemical to the energy storage device 1, and a sensing part 500 for monitoring fire.

As illustrated in FIGS. 1 and 2, the supply part 100 may include a chemical container 110 for storing the fire-extinguishing chemical, a second leakage sensor 120 for detecting leakage of the chemical container 110, a main valve 130 for supplying and stopping the supplying of the fire-extinguishing chemical, an adjuster 140 for adjusting a supply pressure and time of the fire-extinguishing chemical, and a controller 150 that serves as a control subject.

As illustrated in FIGS 2 to 4, the fire-extinguishing part 300 may include a main pipe 310 through which the fire-extinguishing chemical is transferred, a branch pipe 320 branched from the main pipe 310, and an injection pipe 330 connected to the battery module 30 to injection the fire-extinguishing chemical.

As illustrated in FIG. 1, the sensing part 500 may include a first sensor 510 that detects fire within the battery module 30 and a second sensor 520 that detects generation of smoke during fire outside the battery module 30.

Before describing the fire-extinguishing system in detail, the energy storage device 1 will be briefly described.

As illustrated in FIGS. 2 to 4, the exemplary energy storage device 1 of the present invention may include a plurality of battery modules 30 mounted on a plurality of battery racks 10, and a plurality of battery cells 33 accommodated in a case 31 of each of the battery modules 30. Each of the battery cells 33 may be provided as a secondary battery that is chargeable and dischargeable.

The battery rack 10 may include a main frame 11 on which pipes are installed and a sub-frame 13 supporting the battery module 30. The main frame 11 may have an approximately hexahedral shape, and a portion corresponding to the plate surface may be closed or opened. The sub-frame 13 may be disposed in a direction perpendicular to a longitudinal direction of the battery rack 10 (vertical direction based on FIG. 4) to support the battery module 30. A seating groove 13a in which the injection pipe 330, which will be described later, is seated may be defined in the sub-frame 13. The seating groove 13a may be defined along an insertion direction of the battery module 30. In addition, a size of the seating groove 13a may be provided to correspond to or be larger than a length and diameter of the injection pipe 330, which will be described later. The second sensor 520 for detecting smoke may be installed on the battery rack 10 (this will be described later).

The battery module 30 accommodates the plurality of battery cells 33 in the case 31 having the approximately hexahedral shape. The battery cells 33 may be arranged at a regular interval from each other and may be arranged in a plurality of rows. Each battery module 30 may be provided with a BMS, and if fire occurs in the battery cell 33, a fire signal may be transmitted to a controller 150, which will be described later. The plurality of first sensors 510 may be installed inside the battery module 30, and the second sensor 530 may be installed outside the battery rack 10 (this will be described later). The first sensor 510 may be a sensor for detecting an ambient temperature inside the battery module 30. In addition, the first sensor 510 may be a voltage detection sensor. For example, the first sensor 510 may be disposed one by one in each row of the battery cells 33 as illustrated in FIG. 3. Here, the two first sensors 510 may be installed at positions facing each other, respectively. The number and installation location of the first sensors 510 are exemplary.

If a measurement value measured by the first sensor 510 is higher than a preset threshold, the controller 150 may determine the supply of the fire-extinguishing chemical. For example, if a temperature inside the battery module 30 measured by the first sensor 510 is above the threshold, or a voltage is above the threshold, an abnormal signal may be transmitted from the BMS to the controller 150.

For example, if the BMS detects a critical temperature, it is determined to be in an abnormal state, and thereafter, if BMS detects a temperature higher by 1 degree than the critical temperature, the BMS may determine that abnormality has occurred in the battery. Alternatively, if an increase of more than 5 degrees per second is detected twice in succession, the BMS may determine that the abnormality has occurred in the battery. In the case of the voltage, if the voltage higher than the threshold voltage is detected twice in succession, the BMS may determine that the abnormality has occurred in the battery to drop the voltage.

The fire-extinguishing part 300 may be installed on the battery rack 10 and the battery module 30. If fire is detected through the sensing part 500, the fire-extinguishing chemical may be supplied through the supply part 100, and the fire-extinguishing chemical may be transferred to the battery rack 10 and the battery module 30 through the fire-extinguishing part 300. Thus, the fire occurring in the battery module 30 may be quickly extinguished at an early stage. Particularly, if the fire-extinguishing system of the present invention is applied, it is possible to supply the fire-extinguishing chemical to the battery cell 33 in which the fire occurs among the battery cells 33 in the battery module 30 and to the surrounding adjacent battery cells 33.

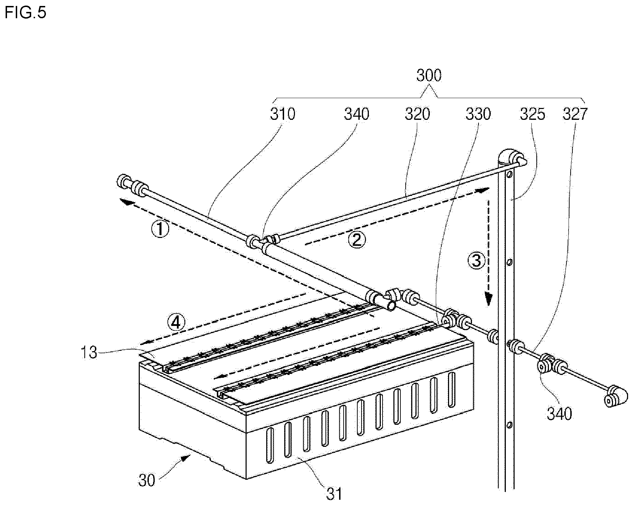

Hereinafter, the fire-extinguishing system according to an embodiment of the present invention will be described in detail (configurations that are not illustrated in FIGS. 5 to 8 will be described with reference to FIGS. 1 to 4).

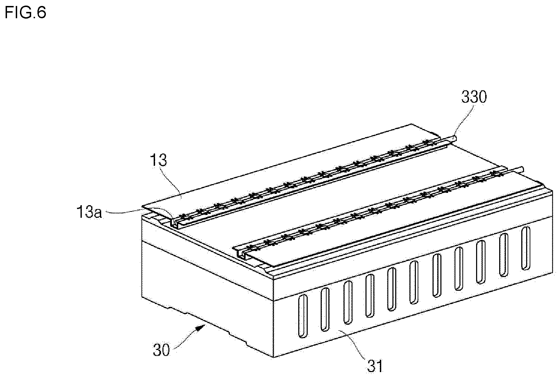

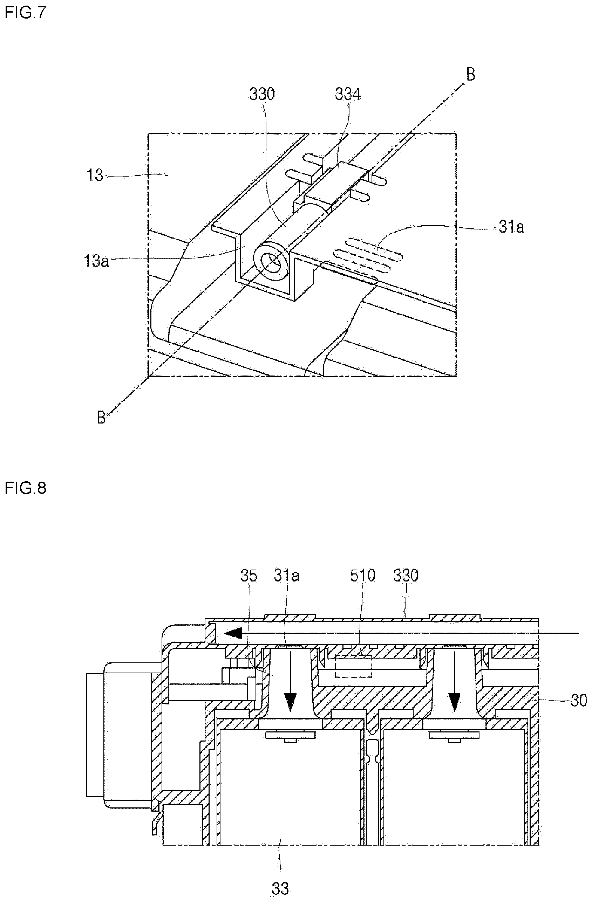

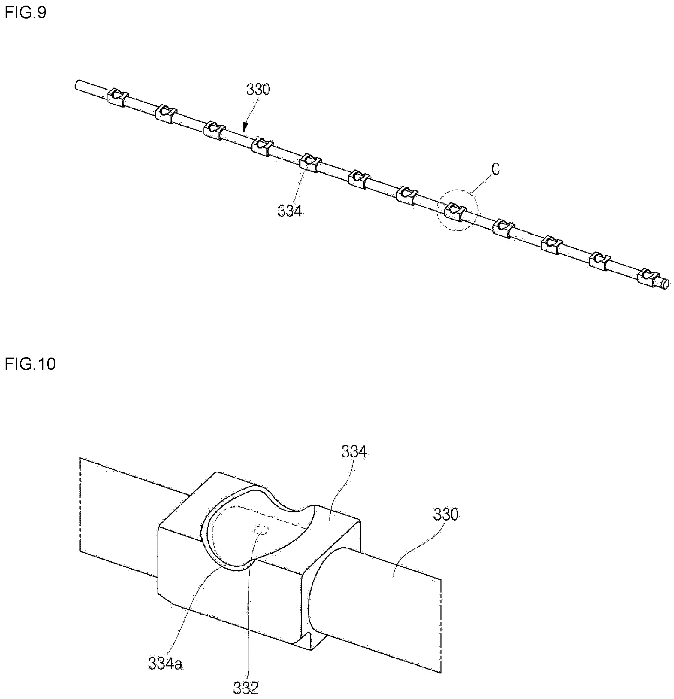

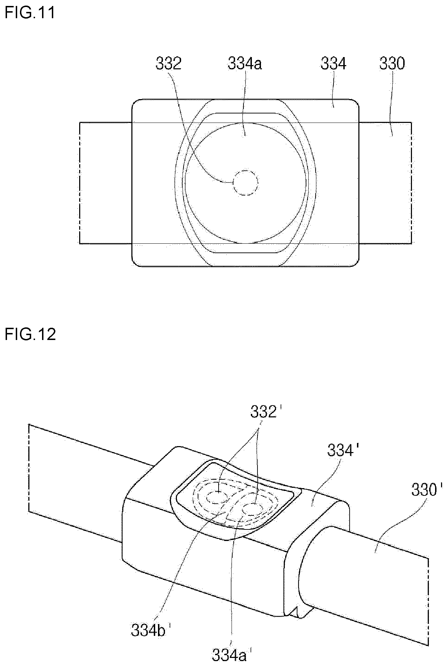

FIG. 5 is a perspective view illustrating a moving direction of the fire-extinguishing chemical in the battery rack of FIG. 4. FIG. 6 is a perspective view illustrating a battery module and an injection pipe illustrated in FIG. 4. FIG. 7 is an enlarged perspective view illustrating a coupling portion of the battery module and the injection pipe according to FIG. 6. FIG. 8 is a partial cross-sectional view taken along line B-B of FIG. 7. FIG. 9 is a perspective view illustrating a bottom surface of the injection pipe illustrated in FIG. 4. FIG. 10 is an enlarged perspective view of a region C of FIG. 9. FIG. 11 is a plan view illustrating a bottom surface of the injection pipe illustrated in FIG. 10.

As illustrated in FIG. 1, components of the supply part 100, the fire-extinguishing part 300, and the sensing part 500 of the fire-extinguishing system may be organically connected to each other.

First, the supply part 100 will be described in detail with reference to FIGS. 1 and 2.

The chemical container 110 is a type of storage container that stores the fire-extinguishing chemical. The chemical container 110 may be fixed to the installation location using a package manner or a wall fixing manner. For example, the chemical container 110 may be a pressure container that stores a high-pressure fire-extinguishing chemical. As the fire-extinguishing chemical, all commonly used fire-extinguishing chemicals such as gas-based fire-extinguishing chemicals such as HFC-23/HFC-125/HFC227ea, CF3CF2C(O)CF(CF3)2, and water may be applied. The fire-extinguishing chemical may be stored in the chemical container 110 in a pressure-accumulating or pressurized manner. Thus, an internal pressure of the chemical container 110 may vary depending on the country of application of the fire-extinguishing system or the type of fire-extinguishing chemical (e.g., domestic fire cylinder filling pressure range: 25 bar to 42 bar, overseas: 25 bar to 34.5 bar, gas system (HFC-23/HFC-125/HFC227ea) 50 bar or more). If the fire-extinguishing chemical is discharged from the high-pressure chemical container 110, the pressure, the flow rate, and the injection time may be adjusted by the adjuster 140. If the injection of the fire-extinguishing chemical is determined by the controller 150, the main valve 130 may be opened, and thus, the fire-extinguishing chemical may be injected.

A leakage detector 120 may be provided to be integrated with the chemical container 110 or may be coupled to the chemical container 110. The leakage detector 120 may detect leakage before injecting the fire-extinguishing chemical. For example, the leakage detector 120 may be a load cell coupled to the chemical container 110 to detect a weight loss.

The main valve 130 functions to open and close the discharge portion of the chemical container 110. The main valve 130 may open and close the discharge portion of the chemical container 110 by the controller 150. If the main valve 130 is opened, the fire-extinguishing chemical is discharged from the chemical container 110 to move to the adjuster 140 along the discharge pipe.

The adjuster 140 functions to adjust the injection pressure of the fire-extinguishing chemical to a final injection pressure. For example, the adjuster 140 may be provided as a regulator. The final injection pressure of the fire-extinguishing chemical may be set in advance, and a regulator capable of implementing the set final injection pressure may be provided. For example, the final injection pressure may be set to 2 bars to 5 bars. Here, the discharge pipe may be a SUS tube or a flexible hose and may be connected to the main pipe 310, which will be described later.

The controller 150 is responsible for controlling the above-described main valve 130 and adjuster 140. For example, the controller 150 may be a type of control board equipped with a processor, an execution memory, a communication device, a display, etc. The controller 150 may communicate with the above-described first sensor 510 and second sensor 520 and control the main valve 130 and the adjuster 140. If fire occurs, the controller 150 may detect the fire through the sensing part 500 and open the main valve 130. The controller 150 may control the adjuster 140 to discharge the fire-extinguishing chemical at a preset final injection pressure to allow the fire-extinguishing chemical to the fire-extinguishing part 300.

As illustrated in FIGS. 2 to 4, the fire-extinguishing part 300 may include a main pipe 310 connected to the chemical container 110 to transfer the fire-extinguishing chemical, a branch pipe 320 branched from the main pipe 310, a rack pipe 325 connected to the branch pipe 320 and disposed on each battery rack 10, an injection pipe 330 disposed adjacent to each battery module 30, and a connection pipe 340 connecting the pipes to each other. Each of all the above-described pipes may have a pipe shape with an empty interior (in some drawings, the main pipe, the branch pipe, the rack pipe, and the injection pipe are differently expressed as cylindrical or rectangular parallelepiped shapes for convenience of expression). The main pipe 310 and the branch pipes 320 may be configured so that a plurality of pipes are gathered together to perform one function.

In more detail, the main pipe 310 may extend to the energy storage device 1 through the plurality of pipes connected thereto. The branch pipe 320 may be coupled to the connection pipe 340 connected to the main pipe 310 and may be installed adjacent to each battery rack 10 or on the battery rack 10. The rack pipe 325 connected to the branch pipe 325 may be installed on each battery rack 10. The rack pipe 325 and the plurality of injection pipes 330 may be connected to each other, and the injection pipes 330 may be installed in parallel with the battery module 30. The connection pipe 340 that may be branched in manners of 2-way, 3-way, 4-way, etc. may be coupled to a connection portion between the plurality of main pipes 310, a connection portion between the main pipe 310 and the branch pipe 320, and a connection portion between the branch pipe 320 and the rack pipe 325. In the event of the fire, the fire-extinguishing chemical supplied from the chemical container 110 may be transferred to the energy storage device 1 through the main pipe 310 and then may be supplied to each battery module 30 through the branch pipe 320 and the injection pipe 330.

One battery rack 10 is described with reference to FIGS. 4 and 5 as an example as follows.

If a direction in which the battery module 30 is inserted is defined as a front side of the battery rack 10, the main pipe 310 may be coupled to a front upper portion of the battery rack 10. One branch pipe 320 may be connected to the main pipe 310 and may be disposed on an upper portion of the battery rack 10. The branch pipe 320 may be disposed along the insertion direction of the battery module 30. For example, the branch pipe 320 may be disposed at a center of the upper portion of the battery rack 10. The rack pipe 325 may be connected to a rear side of the branch pipe 320. The rack pipe 325 may be disposed along the longitudinal direction of the battery rack 10. For example, the rack pipe 325 may be disposed at a center of a rear side of the battery rack 10. The injection pipe 330 may be connected to the rack pipe 325, and the injection pipe 330 may be arranged adjacent to each battery module 30. The injection pipes 330 may be connected to the rack pipe 325 or may be connected to the rack pipe 325 by a plurality of auxiliary pipes 327. The injection pipe 330 may be coupled to the sub-frame 13 of the battery rack (). The fire-extinguishing chemical may be injected downward from the injection pipe 330 coupled to the sub-frame 13. The injection pipe 330 may correspond to the number of rows of battery cells 33 accommodated in the battery module 30. For example, if the battery cells 33 are arranged in two rows in one battery module 30, two injection pipes 330 may be connected.

As illustrated in FIG. 5, the direction of movement of the fire-extinguishing chemical during the fire may correspond to a direction of an arrow. First, the fire-extinguishing chemical moving (①) to the front of the battery rack 10 along the longitudinal direction of the main pipe 310 may move (②) backward from the front upper portion of the battery rack 10 along the branch pipe 320. Thereafter, while the fire-extinguishing chemical moves (③) downward from the rear upper portion of the battery rack 10 along the rack pipe 325, the fire-extinguishing chemical may move to the front side of the battery rack 10 along the injection pipe 330 and thus be supplied to the battery cell 33 in which the fire occurs. The moving direction of the fire-extinguishing chemical illustrated in FIG. 5 is based on an example of the installation of the pipe, and if the arrangement of the pipes are changed, the moving direction of the fire-extinguishing chemical may also be changed accordingly. A plurality of injection holes 332 are defined through the injection pipe 330, and the injection holes 332 may correspond to positions of the battery cells 33 (this will be described later). The fire-extinguishing chemical moving through the injection pipe 330 may pass through a through-part 31a disposed on the case 31 of the battery module 30 and be directly injected onto the upper portion of the battery cell 33.

Hereinafter, the structure in which the fire-extinguishing chemical is injected directly onto the upper portion of the battery cell 33 will be described in more detail.

As illustrated in FIGS. 6 to 8, a seating groove 13a is defined in the sub-frame 13 of the battery rack 10 along the insertion direction of the battery module 30. In addition, the seating groove 13a is defined along the row in which the battery cells 33 are disposed, and the longitudinal direction of the seating groove 35a corresponds to the longitudinal direction of the injection pipe 330. Although not shown in the drawing, a hole may be defined through the seating groove 13a to allow the fire-extinguishing chemical to pass therethrough if the fire-extinguishing chemical is injected. The hole may be defined at the bottom of the seating groove 13a (top surface of the battery module) to correspond to the injection direction of the fire-extinguishing chemical. In addition, a plurality of through-parts 31a may be defined in the case 31 of the battery module 30 to correspond to a position of the hole defined in the seating groove 13a and a position of the vent hole of the battery cell 33.

The through-part 31a is defined to pass through a top surface of the case 31. The through-part 31a may be defined in a circular shape, an oval shape, a long hole shape, a narrow and long slit shape, etc., and may be provided in at least one to plurality. The through-part 31a may communicate with the hole defined in the seating groove 13a and the injection hole 332 of the injection pipe 330, which will be described later. Thus, as illustrated in FIG. 8, the injection pipe 330 and the inside of the case 31 may communicate with each other through the hole of the seating groove 13a and the through-part 31a of the case 31. Therefore, the fire-extinguishing chemical supplied through the injection pipe 330 may be supplied into the case 31. Here, a busbar holder 31b may be provided inside the case 31, and the busbar holder 31b may communicate with the through-part 31a. The busbar holder 31b may be disposed at a position corresponding to the vent hole of each battery cell 33. The busbar holder 31b may serve as a passage (vent passage) through which the fire-extinguishing chemical is injected.

The injection pipe 330 may be provided with a thermosensitive member 334 so that the fire-extinguishing chemical is selectively injected only in the event of the fire.

As illustrated in FIG. 9, a plurality of thermosensitive members 334 may be provided on the injection pipe 330. The thermosensitive members 334 may surround the plurality of injection holes 332 defined in the injection pipe 330 to prevent the fire-extinguishing chemical from being exposed, respectively. Here, one thermosensitive member 334 is provided to surround each injection hole 332. In addition, if fire occurs, the thermosensitive member 334 may be melted due to heat from the fire to open the injection hole 332. If the injection hole 332 is opened, the fire-extinguishing chemical moving through the injection pipe 330 may be injected directly onto the top portion of the battery cell 33. For this, the injection hole 332 may be defined to correspond to the position of the through-part 31a of the case 31, which is disposed to correspond to the vent position of each battery cell 33. For example, a diameter of the injection hole 332 may be in a range of 2 mm to 2.5 mm (first range), and a second range of the diameter may be in a range of 1 mm to 4 mm.

As illustrated in FIGS. 10 and 11, the thermosensitive member 334 may have a shape that completely surrounds the injection hole 332 and its surroundings. For example, the thermosensitive member 334 may have a polyhedral, spherical, or hemispherical body. In some drawings, the thermosensitive member 334 is illustrated in a rectangular parallelepiped shape, but it is not limited to the shape illustrated in the drawings. The thermosensitive member 334 is made to withstand the final injection pressure (for example, 2 bars to 5 bars) of the fire-extinguishing chemical. Thus, if fire occurs in the battery cell 33, the thermosensitive member 334 is melted by heat emitted from the cell vent or by flame or spark caused by the fire. Thus, if fire occurs, the injection hole 332 may be opened so that the fire-extinguishing chemical is injected to a fire region. For example, the thermosensitive member 334 may be melted in a range of 80 degrees Celsius to 250 degrees Celsius. Here, 80 degrees Celsius may be a temperature at which the thermosensitive member 334 begins to be melted, and 250 degrees Celsius may be a temperature at which the thermosensitive member 334 is completely melted. If fire occurs within the battery module 30, a material of the thermosensitive member 334 may be determined by considering the temperature increase. For example, the thermosensitive member 334 may be made of a resin material such as ABS, PP, PC, PE, or PFA. The resin material may be made by applying a high injection pressure to form the thermosensitive member 334 integrally on the injection pipe 330.

A thickness, material, and shape of the thermosensitive member 334 may be adjusted to control a time for which the thermosensitive member 334 is melted by the heat, flame, or spark, and the injection hole 332 is opened. For example, a thin film part 334a may be provided on a bottom surface of the thermosensitive member 334 corresponding to the position of the injection hole 332, and thus, the thermosensitive member 334 at the injection hole 332 may have a thickness thinner than other portions. Therefore, if heat is applied to the thermosensitive member 334, the thin film part 334a may be melted faster than other portions so that the fire-extinguishing chemical is injected quickly. For example, if assuming that the thickness of the thermosensitive member 334 around the thin film part 334a is 1 mm, the thickness of the thin film part 334a may be in a range of 0.3 mm to 0.6 mm (first range). The second range of thickness of the thin film part 334a may be 0.2 mm to 0.9 mm.

A pair of injection holes may be defined at each location at which one thermosensitive member is provided.

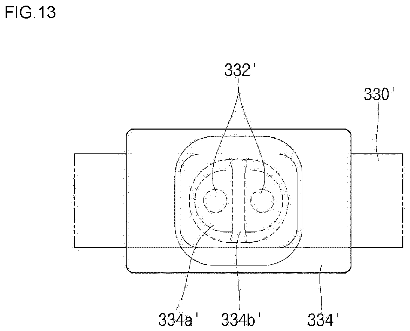

FIG. 12 is an enlarged perspective view illustrating a portion of a bottom surface of an injection pipe according to a second embodiment of the present invention. FIG. 13 is a plan view illustrating a portion of the bottom surface of the injection pipe illustrated in FIG. 12.

As illustrated in FIGS. 12 and 13, two injection holes 332' may be defined in an injection pipe 330' covered by a thin film part 334a' of a thermosensitive member 334'. A rib 334b' disposed between the two injection holes 332' may be disposed on the thin film part 334a'. The rib 334b' has a shape that protrudes from a surface of the thin film part 334a' and has a thickness greater than that of the thin film part 334a' in which the injection hole 332' is defined. The rib 334b' is disposed to be thicker than a side of the injection hole 332' so as to prevent a space between the two injection holes 332' from being melted before the injection hole 332' is opened. Thus, if heat is applied to the thermosensitive member 334', the thin film part 334a' blocking the two injection holes 334a' may be melted rather than the ribs 334b', and thus, the injection hole 332' may be opened to injection the fire-extinguishing chemical.

In the fire-extinguishing system according to an embodiment of the present invention having the above-described configuration, the fire suppression process is described as follows (for convenience, the description is based on the reference numerals of the first embodiment).

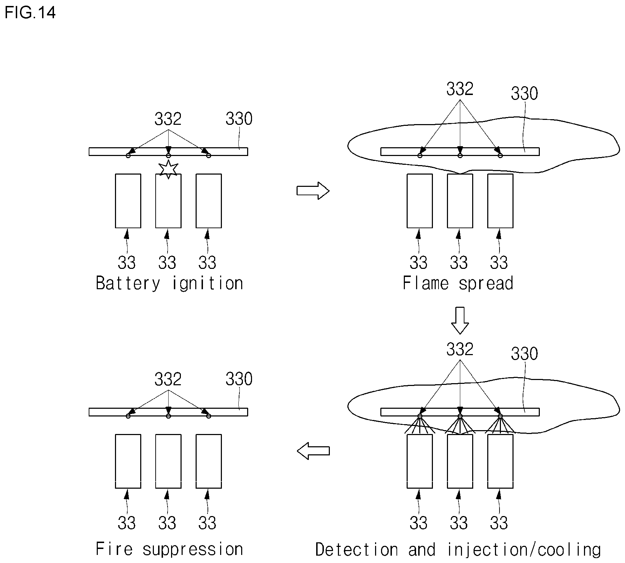

FIG. 14 is a schematic view briefly illustrating the fire suppression process according to an embodiment of the present invention.

As illustrated in FIG. 14, fire may occur in the battery cell 33 within a specific battery module 30. Each battery module 30 may be connected to the injection pipe 330 through which the fire-extinguishing chemical is injected, and the first sensor 510 for fire detection may be provided inside the battery module 30. The first sensor 510 detects that a temperature inside the battery module 30 increases due to the heat generation from the fire. If the fire is detected by the first sensor 510, a fire detection signal may be transmitted to the controller 150 through the BMS of the battery module 30 (transmission of the signal may be performed through various methods such as wireless communication or electrical signal transmission through a contact point). If the controller 150 detects the fire through the sensor 510, the main valve 130 of the chemical container 110 is opened. The fire-extinguishing chemical discharged from the chemical container 110 is adjusted to the final injection pressure by the adjuster 140 and then is discharged. The discharged fire-extinguishing chemical is transported along the main pipe 310 and the branch pipe 320.

The flame and heat are generated in the battery cell 33 in which the fire occurs, and the thermosensitive member 334 of the adjacent injection pipe 330 is melted by the flame and heat. If the thermosensitive member 334 is melted, and the injection hole 332 is opened, a pressure in the corresponding region is lowered, and thus, the fire-extinguishing chemical moves toward the injection pipe 330 in which the injection hole 332 is opened according to a pressure gradient. Thus, the fire-extinguishing chemical may be supplied to the battery cell 33 in which the fire occurs and then be injected on the fire region. Because the fire is extinguished by injecting the fire-extinguishing chemical, the fire may be prevented from being spread to the surrounding battery modules.

In the present invention, in addition to the fire detection using the above-described sensor, fire monitoring may be performed through additional smoke detection.

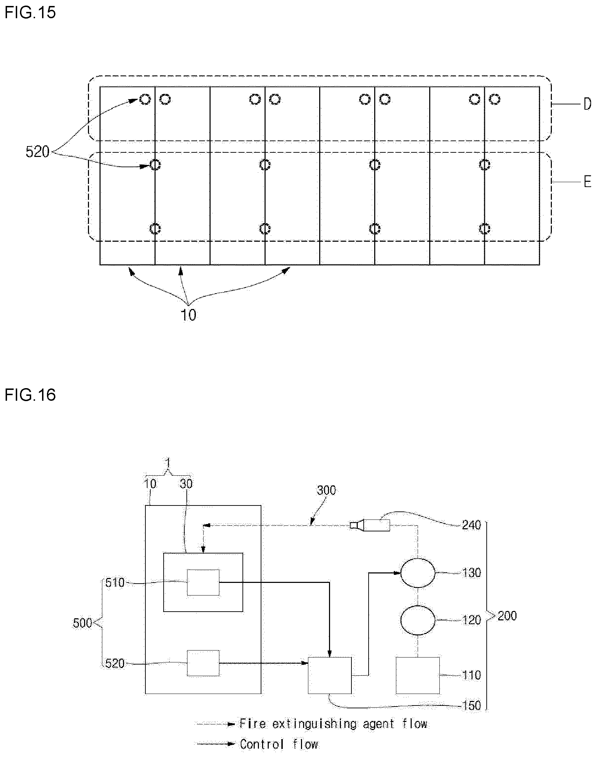

FIG. 15 is a schematic view briefly illustrating a fire-extinguishing system according to another embodiment of the present invention.

As illustrated in FIG. 15, a plurality of second sensors 520 may be installed on a battery rack 10. Each of the second sensors 520 may be applied in combination with a first sensor 510, or only the second sensors 520 may be applied without the sensor. The second sensor 520 may be installed in an upper region D of the battery rack 10 in consideration of characteristics in which smoke rises upward. However, if a lot of smoke is generated, it does not only rise but also is spread around a fire region, and thus, the second sensor may also be installed in a lower region E of the battery rack 10 for detection reference. For example, the second sensor 520 may be installed in each upper region D of each battery rack 10, and the second sensors 520 may be installed one by one between two battery racks 10. Alternatively, the second sensor 520 may be installed in each upper region D of each battery rack 10, and one or two second sensors 520 may be installed between the two battery racks 10.

As described above, the fire-extinguishing system may be provided to early suppress and extinguish the fire that may occur due to the lighting strike on the ground, the short circuit, etc. due to the internal and external factors of the energy storage device and minimize the spreading of the fire. As a result, there may be the effect of protecting the expensive energy storage device and improving the customer reliability.

Hereinafter, a fire-extinguishing system of an energy storage system according to another embodiment of the present invention will be described.

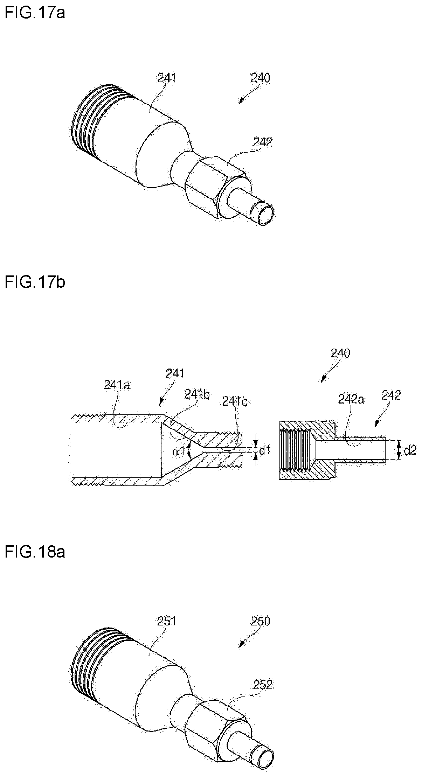

FIG. 16 is a block diagram briefly illustrating a fire-extinguishing system of an energy storage system according to further another embodiment of the present invention. FIGS. 17a and 17b are views illustrating an example of a pipe fitting member used in the fire-extinguishing system of FIG. 16.

First, referring to FIG. 16, a fire-extinguishing system may include a supply part 200 for supplying a fire-extinguishing chemical to an energy storage device 1, a fire-extinguishing part 300 for transferring and injecting the fire-extinguishing chemical to the energy storage device 1, and a sensing part 500 for monitoring fire. Here, because configurations of the fire-extinguishing part 300 and the sensing part 500 are the same as those of the embodiment illustrated in FIG. 1, the following description will focus on the supply part 200, which has a difference in configuration.

The supply part 200 may include a chemical container 110 for storing the fire-extinguishing chemical, a second leakage sensor 120 for detecting leakage of the chemical container 110, a main valve 130 for supplying and stopping the supplying of the fire-extinguishing chemical, a pipe fitting member 240 for adjusting a supply pressure and time of the fire-extinguishing chemical, and a controller 150 that serves as a control subject.

Among these, the pipe fitting member 240 may replace the regulator as the adjuster 140 provided in the previous embodiment. Specifically, the regulator is easy to control a pressure or a flow rate of the fire-extinguishing chemical, but is expensive and has the burden of requiring continuous management, such as preventing an inflow of foreign substances. On the other hand, the pipe fitting member 240 may reduce costs and management burden by replacing the regulator with the pipe fitting member 240.

This pipe fitting member 240 may be configured for the purpose of connecting pipes having orifices having different diameters to each other. Particularly, the pipe fitting member 240 may reduce the diameter of the orifice to lower an injection pressure and increase an injection time if injecting the fire-extinguishing chemical.

Specifically referring to FIGS. 17a and 17b, the pipe fitting member 240 may include a swaged nipple 241 and an adapter 242. Here, the swaged nipple may include a first orifice 241a having a relatively large diameter at one end coupled to the supply part 100, a second orifice 241b that is connected to the first orifice 241a and has a gradually smaller diameter, and a third orifice 241c connected to the second orifice 241b and having a relatively small diameter.

Here, the first orifice 241a may be coupled to the chemical container 110 through a main valve 130 of the supply part 100. The first orifice 241a may be configured in various sizes to fit the fire-extinguishing container 110. In addition, the first orifice 241a may be configured to receive fire-extinguishing chemical from the fire-extinguishing container 110 and may have a relatively large inner diameter. In addition, an outer diameter of the first orifice 241a may be 1-1/4" to 1-1/2" based on NPT, which corresponds to the diameter typically used in the chemical container 110.

The second orifice 241b may be connected to the first orifice 241a and may have a gradually decreasing diameter. Here, an angle α1 of the second orifice 241a may range from 30° to 120° based on a cross-section of the second orifice 241b. If the angle α1 is 30 degrees or more, it is possible to reduce the diameter to the desired third orifice 241c without excessively increasing in length of the second orifice 241b. In addition, If the angle α1 is 120 degrees or less, a sharp decrease in diameter may be prevented to prevent an excessive internal pressure from being applied to the second orifice 241b.

The third orifice 241c may be connected to the second orifice 241b, and an inner diameter of the third orifice 241c may be set to be relatively small compared to the first orifice 241a. In addition, the inner diameter d1 of the third orifice 241c may be 1.5 [mm] to 2.5 [mm]. If the inner diameter d1 of the third orifice 241c is 1.5 [mm] to 2.5 [mm], the injection pressure for the fire-extinguishing chemical having a pressure of 22 [bar] to 42 [bar], which is applied from the fire-extinguishing container 110, may be reduced by 2 [bar] to 5 [bar], which has an advantage of increasing the injection time to 5 minutes or more. In addition, the outer diameter of the third orifice 241c may be configured to be 1/2" to 3/4" based on the NPT.

The adapter 242 may be coupled to the outer diameter of the third orifice 241c of the swaged nipple 241. In addition, an inner diameter d2 of the adapter 242 may be set larger than that of the third orifice 241c. The inner diameter d2 of the adapter 242 may range of 11 [mm] to 13 [mm]. If the inner diameter d2 of the adapter 242 is 11 [mm] to 13 [mm], it is advantageous to deliver the fire-extinguishing chemical to the fire-extinguishing part 300 while maintaining the pressure set at the third orifice 241c at a front end.

Thus, thereafter, if the fire-extinguishing chemical is injected into the battery module 30 of the energy storage device 1 through the fire-extinguishing part 300 coupled to the adapter 242, because the fire extinguishing chemical is injected at a lower pressure compared to a pressure if the fire-extinguishing chemical reaches the swaged nipple 241, it is possible to adjust the injection pressure and increase in injection time without using the regulator.

Hereinafter, a fire-extinguishing system of an energy storage system according to another embodiment of the present invention will be described.

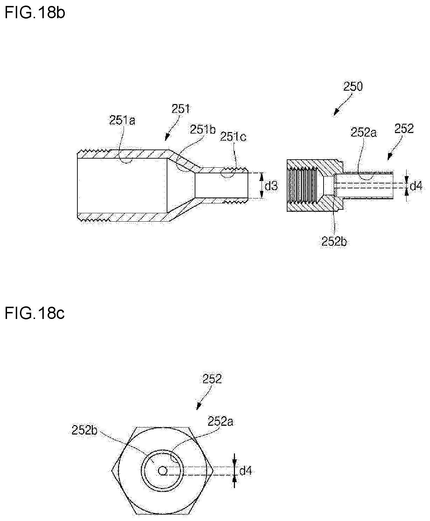

FIGS. 18a and 18b are views illustrating another example of the pipe fitting member used in the fire-extinguishing system of FIG. 16.

Referring to FIG. 18a, in the fire-extinguishing system of the energy storage system according to further another embodiment of the present invention, the pipe fitting member 250 may include a swaged nipple 251 and an adapter 252.

Next, referring to FIGS. 18b and 18c, the swaged nipple 251 may include a first orifice 251a having a relatively large diameter, a second orifice 251b connected to the first orifice 251a and having a gradually decreasing diameter, and a third orifice 251c connected to the second orifice 251b and having a relatively small diameter. Here, an inner diameter d3 of the third orifice 251 is less than that of the first orifice 251a, but does not need to be small enough to reduce the injection pressure of the fire-extinguishing chemical. This is because, as will be described later, the injection pressure may be reduced by reducing an inner diameter inside the adapter 252. Thus, this embodiment has an advantage of being able to replace the shape of the swaged nipple 251 with an existing commercially available component.

In the case of the adapter 252, the adapter 252 is coupled to the swaged nipple 251 and has an orifice 252a inside the other end thereof. In addition, the orifice 254a may further include a ring member 252b to reduce the inner diameter. This ring member 252b also has an orifice therein, and its inner diameter d4 may be set to be less than the inner diameter d3 of the third orifice 251. In addition, due to this ring member 252b, the inner diameter d3 may be provided to be 1.5 [mm] to 2.5 [mm] as in the previous embodiment. Thus, the injection pressure may be reduced by 2 [bar] to 5 [bar] for the fire-extinguishing chemical having a pressure of 22 [bar] to 42 [bar], which is applied from the fire-extinguishing container 110, and the injection time may increase to 5 minutes or more.

Hereinafter, a fire-extinguishing system of an energy storage system according to another embodiment of the present invention will be described.

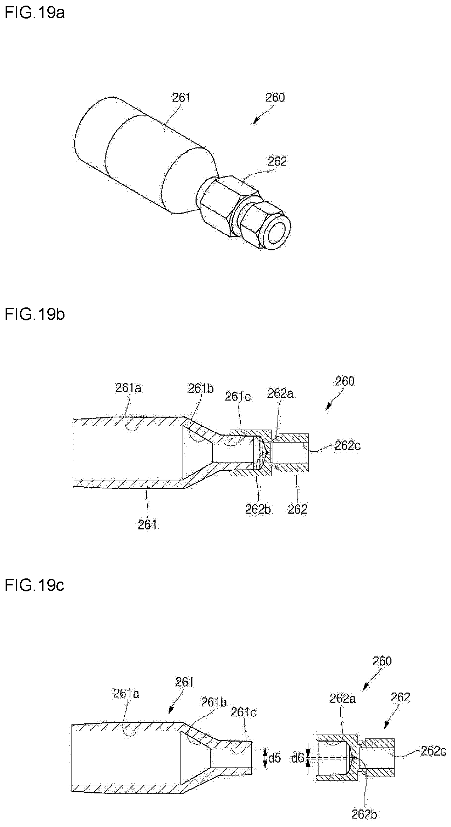

FIGS. 19a and 19b are views illustrating further another example of the pipe fitting member used in the fire-extinguishing system of FIG. 16.

Referring to FIG. 19a to 19c, in the fire-extinguishing system of the energy storage system according to further another embodiment of the present invention, the pipe fitting member 260 may include a swaged nipple 261 and an adapter 262.

Referring to FIG. 19a, in the fire-extinguishing system of the energy storage system according to further another embodiment of the present invention, the pipe fitting member 260 may include a swaged nipple 261 and an adapter 262.

Next, referring to FIGS. 19b and 19c, the swaged nipple 261 may include a first orifice 261a having a relatively large diameter, a second orifice 261b connected to the first orifice 261a and having a gradually decreasing diameter, and a third orifice 261c connected to the second orifice 261b and having a relatively small diameter. Here, an inner diameter d5 of the third orifice 261 is less than that of the first orifice 261a, but does not need to be small enough to reduce the injection pressure of the fire-extinguishing chemical.

In the case of the adapter 262, the adapter 262 may include a first orifice 262a connected to the swaged nipple 261, specifically connected to the swaged nipple 261, a second orifice 262b connected to the first orifice 262a and having a small inner diameter, and a third orifice 262c connected to the second orifice 262b.

Here, an inner diameter d6 of the second orifice 262b may be set to be less than the inner diameter d5 of the third orifice 261c of the front swaged nipple 261. In addition, the inner diameter d6 of the second orifice 262b may be provided to have an inner diameter d3 of 1.5 [mm] to 2.5 [mm], as in the previous embodiment. Thus, the injection pressure may be reduced by 2 [bar] to 5 [bar] for the fire-extinguishing chemical having a pressure of 22 [bar] to 42 [bar], which is applied from the fire-extinguishing container 110, and the injection time may increase to 5 minutes or more.

Hereinafter, a fire-extinguishing system of an energy storage system according to another embodiment of the present invention will be described.

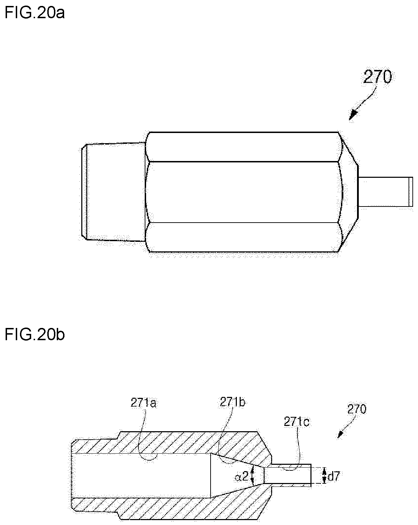

FIGS. 20a and 20b are views illustrating further another example of the pipe fitting member used in the fire-extinguishing system of FIG. 16.

Referring to FIGS. 20a and 20b, the pipe fitting member 270 may include a swaged ripple 271. Here, the swaged nipple may include a first orifice 271a having a relatively large diameter, a second orifice 271b that is connected to the first orifice 271a and has a gradually smaller diameter, and a third orifice 271c connected to the second orifice 271b and having a relatively small inner diameter. Here, an inner diameter d7 of the third orifice 271c may be less than that of the first orifice 261a, and as in the previous embodiment, the inner diameter d7 may be provided to be 1.5 [mm] to 2.5 [mm].

In addition, an angle α2 of the second orifice 271b may range from 30° to 120°. If the angle α2 is 30 or more, it is possible to reduce the inner diameter d7 to the desired third orifice 271c without excessively increasing in length of the second orifice 271b. In addition, If the angle α2 is 120 degrees or less, a sharp decrease in diameter may be prevented to prevent an excessive internal pressure from being applied to the second orifice 271b.

Hereinafter, an effect of maintaining the injection time of the energy storage system according to another embodiment of the present invention will be described in more detail.

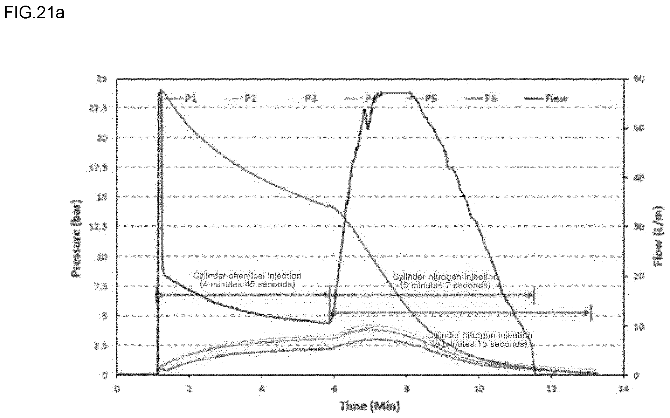

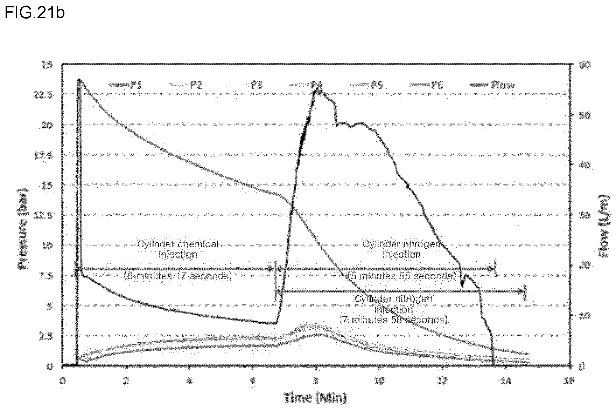

FIGS. 21a and 21b are graphs comparing changes in injection time of a fire-extinguishing chemical in the fire-distinguishing system of the energy storage system according to further another embodiment of the present invention.

Referring to FIG. 21a, the injection time of the fire-extinguishing chemical before the energy storage system according to further another embodiment of the present invention is applied is illustrated. Specifically, if the fire-extinguishing chemical begins to be injected, it may be divided into times for which the fire-extinguishing chemical and an inert gas (nitrogen) for injecting the chemical are injected. In this case, because the inert gas also has a fire-extinguishing effect, the injection time of the fire-extinguishing chemical may be defined as the sum of the two times.

As illustrated in FIG. 21a, in the typical fire-extinguishing system, it is confirmed that the fire-extinguishing chemical is initially injected for about 4 minutes and 45 seconds, and then, the inert gas is injected for 5 minutes and 7 seconds to 7 minutes and 15 seconds depending on the pressure. Therefore, the total injection time of the fire-extinguishing chemical may be confirmed to be 9 minutes 52 seconds to 12 minutes.

On the other hand, referring to FIG. 21b, in the case of the fire-extinguishing system of the energy storage system according to further another embodiment of the present invention, it is confirmed that the injection of the fire-extinguishing chemical is performed for about 6 minutes and 17 seconds, and the injection of the inert gas is also performed for 6 minutes and 55 seconds to seconds to 7 minutes and 58 seconds depending on the pressure. Therefore, If the fire-extinguishing system of the energy storage system according to further another embodiment of the present invention is applied, it is confirmed that the injection time of the total fire-extinguishing chemical is 13 minutes 12 seconds to 14 minutes 15 seconds, and thus, it is confirmed that moisture has increased compared to the existing system.

Therefore, as described above, in the configuration of the fire-extinguishing system of the energy storage system according to further another embodiment of the present invention, it is confirmed that the injection time increases by lowering the injection pressure by applying the configuration of the pipe fitting members 240 to 270 instead of the regulator.

The above-mentioned embodiment is merely an embodiment, and thus, the present disclosure is not limited to the foregoing embodiment, and also it will be understood by those of ordinary skill in the art that various changes in form and details may be made therein without departing from the spirit and scope of the present disclosure as defined by the following claims.

## Claims

1. A fire-extinguishing system of an energy storage device comprising a plurality of battery racks configured to accommodate a plurality of battery modules, the fire-extinguishing system comprising:
a sensing part configured to detect at least one of a temperature, a voltage, or smoke of each of the battery modules; and
a fire-extinguishing part configured to inject a fire-extinguishing chemical to the battery module if at least one of values detected by the sensing part is greater than a preset threshold value,
wherein the fire-extinguishing part further comprises a pipe fitting member provided on a path through which the fire-extinguishing chemical is supplied with respect to the battery racks to change a supply pressure of the fire-extinguishing chemical.

2. The fire-extinguishing system as claimed in claim 1, wherein the pipe fitting member is configured to reduce an inner diameter of the path through which the fire-extinguishing chemical passes.

3. The fire-extinguishing system as claimed in claim 1, wherein the pipe fitting member comprises an orifice having an inner diameter less than that of an orifice connected to the fire-extinguishing part in a portion of the path through which the fire extinguishing chemical is supplied to the battery racks.

4. The fire-extinguishing system as claimed in claim 3, wherein the pipe fitting member comprises: a swaged nipple provided with a first orifice coupled to a chemical container of the fire-extinguishing part, and a second orifice having an inner diameter that gradually decreases from the first orifice.

5. The fire-extinguishing system as claimed in claim 4, wherein, based on a cross-section, an angle of the second orifice is 30° to 120°.

6. The fire-extinguishing system as claimed in claim 4, wherein a third orifice having an inner diameter that has the same size as the final inner diameter of the second orifice is further disposed at an end of the second orifice.

7. The fire-extinguishing system as claimed in claim 6, wherein the pipe fitting member further comprises an adapter coupled to an end of the swaged nipple and provided with an orifice therein to define an injection path for the fire-extinguishing chemical.

8. The fire-extinguishing system as claimed in claim 7, wherein a ring member having an inner diameter less than that of the orifice of the adapter is further provided inside the adapter.

9. The fire-extinguishing system as claimed in claim 1, wherein, in the inner diameters of the pipe fitting member, the smallest inner diameter is 1.5 [mm] to 2.5 [mm].

10. The fire-extinguishing system as claimed in claim 1, wherein a pressure of the fire-extinguishing chemical passing through the pipe fitting member is reduced by 2 [bar] to 5 [bar].
